# DEMANDE DE BREVET EUROPEEN

(11) **EP 1 469 489 A1**
(43) Date de publication de la demande: **20.10.2004**
(21) Numéro de dépôt: 04354007.9
(22) Date de dépôt: 24.02.2004
(51) Int. Cl.: H01G 4/38

(54) **Dispositif de correction de facteur de puissance triphasé**

(30) Priorité: 14.04.2003 FR 0304621
(71) Demandeur: Schneider Electric Industries SAS, 92500 Rueil-Malmaison (FR)
(72) Inventeur: Sebillotte, Eric, Schneider Electric Industries, 38050 Grenoble cedex 09 (FR); Issiakhem, Younes, Schneider Electric Industries, 38050 Grenoble cedex 09 (FR)
(74) Mandataire: Poirier, Jean-Michel Serge

(57) **Abrégé**

L'invention concerne un dispositif de correction de facteur de puissance triphasé (10) comportant trois condensateurs de puissance monophasés (1) câblés électriquement en triangle. Chaque condensateur (1) est muni de deux bornes (2). Les condensateurs (1) sont solidaires d'un plateau (3) portant trois plages de connexion (4) destinées à relier le dispositif (10) à une installation électrique ou à un autre dispositif de correction de facteur de puissance.

Selon l'invention, le plateau (3) comporte des orifices laissant passer les bornes (2) des condensateurs, et les plages de connexion (4) sont disposées en triangle ; les orifices (5A, 5C) et les plages de connexion (4A, 4C) les plus éloignées de l'axe de symétrie (A) ont des positions relatives identiques dans la direction définie par l'axe (A), qui sont inversées par rapport aux positions relatives des orifices (5B) et de la plage de connexion (4B) les plus proches de l'axe (A).

Les trois condensateurs (1) sont alignés ou peuvent former un triangle isocèle selon leur diamètre.

Les bornes (2) des condensateurs (1) peuvent être pliées et mises directement en contact avec les plages de raccordement (4).

## Description

### DOMAINE TECHNIQUE DE L'INVENTION

L'invention est relative à un dispositif de correction de facteur de puissance triphasé, comportant trois condensateurs de puissance monophasés câblés électriquement en triangle.

### ETAT DE LA TECHNIQUE

Il existe de nombreux modèles de condensateurs de puissance monophasés, constitués d'un élément de condensateur. Cet élément de condensateur comporte un enroulement de couches isolantes et de couches électriquement conductrices formant une première et une seconde électrode, contenu dans une enveloppe isolante généralement de forme cylindrique. Des bornes sont reliées à la première et à la seconde électrode afin de pouvoir connecter le condensateur à un circuit électrique.

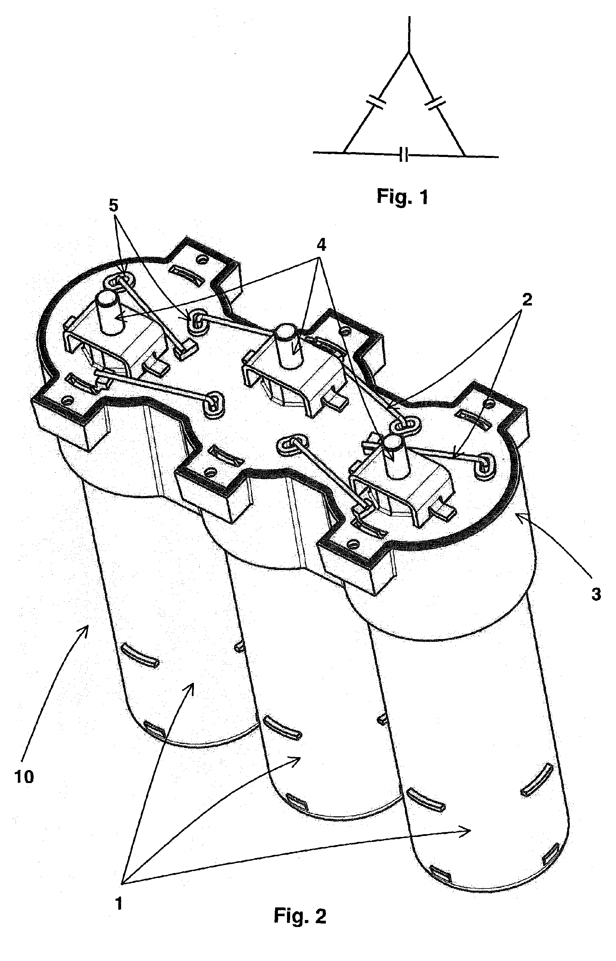

Pour réaliser un dispositif de correction du facteur de puissance triphasé pour une installation électrique, il est courant d'utiliser des condensateurs de puissance câblés électriquement en triangle ou en étoile. Le câblage électrique en triangle est le plus fréquent, et consiste à relier électriquement les trois condensateurs en circuit fermé, les bornes de chaque condensateur étant reliées à une borne de chacun des deux autres condensateur comme le représente schématiquement la Figure 1. Le dispositif triphasé ainsi constitué dispose de trois plages de connexion électrique afin d'être relié à l'installation électrique dont le facteur de puissance doit être corrigé, et éventuellement à d'autres dispositifs triphasés qui sont alors montés en parallèle, en fonction de la correction à apporter et de la puissance de l'installation électrique.

En pratique, les dispositifs de correction de facteur de puissance triphasés appartiennent à trois types, selon leur mode de construction. Dans un premier mode de construction, le dispositif comporte trois bobines concentriques câblées électriquement en triangle au sein d'une enveloppe unique. Selon un second mode de construction, trois bobines indépendantes sont reliées électriquement en triangle au sein d'une enveloppe unique. Dans ces deux premiers modes de construction, le dispositif est spécifiquement conçu pour une utilisation dans un réseau triphasé et il comporte généralement un unique moyen de déconnexion, par exemple par surpression et rupture d'un conducteur. Un troisième mode de construction consiste à assembler trois condensateurs de puissance monophasés, c'est à dire trois condensateurs de puissance disposant chacun de leur propre système de protection et de leur propre enveloppe. Quel que soit le mode de construction, trois plages de connexion électrique servent à relier le dispositif au réseau électrique triphasé ou à le relier en parallèle à d'autres dispositifs triphasés.

L'invention concerne un dispositif de correction de facteur de puissance selon le troisième mode de construction, qui comprend donc trois condensateurs de puissance monophasés câblés électriquement en triangle.

Actuellement, le câblage des trois condensateurs de puissance monophasés est effectué soit en production chez le fabricant du dispositif, soit directement sur le site de l'utilisateur final. Dans ce dernier cas, on utilise les bornes des condensateurs monophasés sur lesquelles sont réalisés directement le câblage électrique triphasé en triangle et la mise en parallèle avec d'autres dispositifs triphasés ou la connexion au réseau triphasé. Cette solution réclame un temps de préparation important des conducteurs qu'il faut découper et dénuder avant de les souder, et nécessite une grande quantité de cuivre.

Il existe également des dispositifs triphasés comportant trois condensateurs de puissance monophasés câblés électriquement en triangle chez le fabricant. Dans ces dispositifs selon l'art antérieur, les trois condensateurs sont alignés et leurs bornes sont reliées électriquement à trois plages de connexion également alignées. Cette disposition permet de faciliter le montage en parallèle d'une pluralité de dispositifs identiques, en utilisant un minimum d'espace, mais cette construction impose soit le croisement des fils conducteurs qui doivent alors être isolés, soit un câblage complexe afin d'éviter le croisement des fils conducteurs. Dans les deux cas, l'opération de câblage doit être effectuée manuellement, ce qui augmente le coût de production du dispositif.

### EXPOSE DE L'INVENTION

L'invention vise donc à remédier aux inconvénients de l'état de la technique, de manière à proposer un dispositif de correction de facteur de puissance triphasé comportant trois condensateurs de puissance monophasé câblés électriquement en triangle, dont les bornes sont reliées sans croisement à trois plages de connexion électrique, ce qui permet d'automatiser la fabrication du dispositif en minimisant la consommation de cuivre et en conservant la possibilité de monter facilement en parallèle plusieurs dispositifs.

A cet effet, l'invention a pour objet un dispositif de correction de facteur de puissance triphasé comportant trois condensateurs de puissances monophasés de forme sensiblement cylindrique munis chacun de deux bornes sur l'une de leur faces planes, lesdits condensateurs étant solidaires d'un plateau de forme sensiblement symétrique par rapport à un axe (A) et portant trois plages de connexion destinées à relier le dispositif à une installation électrique, les bornes étant reliées électriquement aux plages de connexion selon un câblage électrique en triangle, dispositif dans lequel le plateau comporte des orifices laissant passer les bornes des condensateurs, les orifices et les plages de connexion les plus éloignés de l'axe de symétrie (A) ayant des positions relatives identiques dans la direction définie par l'axe de symétrie (A) qui sont inversées par rapport aux positions relatives des orifices et de la plage de connexion les plus proches de l'axe (A)

La disposition particulière des plages de connexion et des orifices sur le plateau permet d'éviter le croisement des fils conducteurs reliant les bornes aux plages de connexion voire, selon un mode de réalisation particulièrement avantageux, de plier les bornes et de les mettre directement en contact avec les plages de connexion.

Ainsi la fabrication du dispositif de correction de facteur de puissance triphasé selon l'invention est-elle considérablement simplifiée par rapport à celle des dispositifs selon l'art antérieur et peut être automatisée.

Selon des modes de réalisation particuliers, les trois condensateurs sont alignés ou forment un triangle sensiblement isocèle.

### BREVE DESCRIPTION DES FIGURES

D'autres avantages et caractéristiques ressortiront plus clairement de la description qui va suivre d'un mode particulier de réalisation de l'invention, donné à titre d'exemple non limitatif, et représenté aux dessins annexés sur lesquels :
- la figure 1 représente un montage de trois condensateurs câblés électriquement en triangle;
- la figure 2 représente un dispositif selon l'invention ;
- la figure 3 représente un premier mode de réalisation d'un dispositif selon l'invention ;
- la figure 4 représente un second mode de réalisation d'un dispositif selon l'invention ;

### DESCRIPTION DETAILLEE D'UN MODE DE REALISATION

En référence à la figure 2, un dispositif de correction de facteur de puissance triphasé (10) selon l'invention comprend trois condensateurs (1) de puissance monophasés munis chacun de deux bornes (2) sur l'une de leurs faces planes, et un plateau (3) supportant trois plages de connexion (4) qui permettent de connecter électriquement le dispositif à une installation électrique. Le plateau (3) est porté par la face supérieure des trois condensateurs (1). Le plateau comporte des orifices (5) afin de laisser passer les bornes (2) des trois condensateurs (1) monophasés, lesquels sont de préférence de forme identique. Les dimensions du plateau (3) sont définies en fonction de contraintes d'encombrement maximal toléré et de contraintes thermiques. La nécessité de refroidir les condensateurs (1) impose en effet une distance minimale entre eux afin d'assurer une circulation d'air, et les dispositifs (10) sont destinés à être installés dans des armoires existantes imposant une dimension transversale et longitudinale.

Selon l'invention, le plateau (3) est de forme sensiblement symétrique par rapport à un axe (A). Ainsi, deux des condensateurs (1) se trouvent près des extrémités du plateau (2) et le troisième condensateur est proche de l'axe de symétrie (A). Il en est de même pour les orifices qui laissent passer les bornes (2) des condensateurs, et également pour les plages de connexion (4).

Si le diamètre des condensateurs (1) est suffisamment faible pour obtenir une distance minimale entre eux tout en respectant la contrainte d'encombrement transversal maximal, alors les trois condensateurs (1) peuvent être alignés comme représenté à la Figure 2.

Selon l'invention, les paires d'orifices (5A, 5C) et les plages de connexion (4A, 4C) les plus éloignées de l'axe de symétrie (A) ont des positions relatives identiques dans la direction définie par l'axe (A), qui sont inversées par rapport aux positions relatives de la paire d'orifices (5B) et de la plage de connexion (4B) les plus proches de l'axe de symétrie (A). Ainsi sur la figure 2, les deux plages de connexion (4A, 4C) qui sont aux extrémités du plateau se trouvent au dessus des orifices correspondants, alors que la plage de connexion (4B) la plus proche de l'axe de symétrie (A) se trouve en dessous des orifices correspondants.

Cette disposition relative particulière des plages de connexion (3) et des bornes (2) traversant les orifices permet d'éviter le croisement des fils conducteurs reliant les unes aux autres selon le câblage électrique en triangle, et donc d'utiliser des fils non isolés et de longueur minimale. Dans un mode de réalisation préférentiel, les bornes (2) des condensateurs (1) sont courbées et sont directement mises en contact avec les plages de connexion (4) auxquelles elles peuvent être soudées, ce qui permet de simplifier la fabrication du dispositif et d'en réduire le coût.

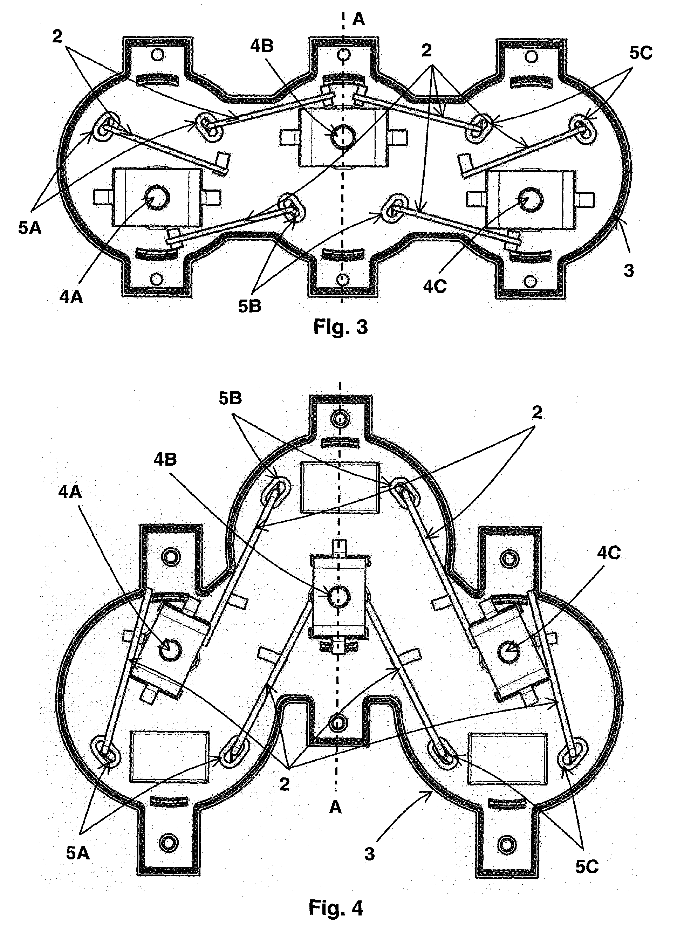

Si le diamètre des condensateurs (1) est trop important il n'est plus possible de respecter les contraintes thermiques et d'encombrement si les condensateurs sont alignés, les trois condensateurs (1) sont disposés en triangle comme représenté sur la Figure 4.

En effet, la disposition des plages de connexion (4) du dispositif de compensation de facteur de puissance triphasé (10) selon l'invention permet de proposer une gamme de produits compatibles. Une même disposition des plages de connexion (4) peut être utilisée sur des plateaux (3) destinés à des condensateurs (1) de diamètres différents, comme représenté aux Figures 3 et 4, tout en respectant les contraintes thermiques et de dimensionnement et en évitant le croisement des fils conducteurs ou des bornes (2) ce qui permet l'automatisation de la fabrication du dispositif (10).

La disposition identique des plages de connexion sur les plateaux de deux dispositifs comportant des condensateurs monophasés de diamètres différents garantit une mise en parallèle aisée des dispositifs de la gamme. En effet, il y a équidistance entre les bornes correspondantes des deux dispositifs, ce qui permet d'utiliser des moyens de connexion standards, tels que des barres, lors de la mise en parallèle de deux dispositifs selon l'invention comportant des condensateurs de diamètres différents.

Optionnellement, le dispositif selon l'invention peut être inséré dans un boîtier protecteur, non représenté sur les figures, laissant dépasser les bornes de connexion.

Un dispositif selon l'invention procure donc le triple avantage d'avoir une fabrication automatisée grâce à l'absence de croisement des conducteurs lors du câblage en triangle, une construction particulièrement simple et peu coûteuse avec l'optimisation des longueur des câbles, voire l'utilisation uniquement des bornes pour réaliser le câblage, et de pouvoir être décliné en gamme de produits.

## Revendications

1. Dispositif de correction de facteur de puissance triphasé comportant trois condensateurs de puissance monophasés (1) de forme sensiblement cylindrique munis chacun de deux bornes (2) sur l'une de leurs faces planes, lesdits condensateurs (1) étant solidaires d'un plateau (3) de forme sensiblement symétrique par rapport à un axe (A) et portant trois plages de connexion (4A, 4B, 4C) destinées à relier le dispositif à une installation électrique, les bornes étant reliées électriquement aux plages de connexion selon un câblage électrique en triangle
**caractérisé en ce que**
- le plateau (3) comporte des orifices (5) laissant passer les bornes (2) des condensateurs (1),
- les orifices (5A, 5C) et les plages de connexion (4A, 4C) les plus éloignés de l'axe de symétrie (A) ont des positions relatives identiques dans la direction définie par l'axe (A), qui sont inversées par rapport aux positions relatives des orifices (5B) et de la plage de connexion (4B) les plus proches de l'axe (A)

2. Dispositif de correction de facteur de puissance triphasé selon la revendication 1, **caractérisé en ce que** les trois condensateurs (1) sont alignés.

3. Dispositif de correction de facteur de puissance triphasé selon la revendication 1, **caractérisé en ce que** les trois condensateurs (1) forment un triangle sensiblement isocèle.

4. Dispositif de correction de facteur de puissance triphasé selon l'une des revendications précédentes, **caractérisé en ce que** les bornes (2) des condensateurs (1) sont pliées et directement mises en contact avec les plages de connexion (3).
